# EUROPEAN PATENT SPECIFICATION

(11) **EP 3 111 541 B1**
(45) Date of publication and mention of the grant of the patent: **11.05.2022**
(21) Application number: 15711436.4
(22) Date of filing: 26.02.2015
(51) Int. Cl.: B60L 3/00, B60L 3/04, B60L 50/51, B60L 53/00, H02M 1/36

(54) **PRE-CHARGING SWITCH ARRANGEMENT, POWER SUPPLYING ARRANGEMENT AND METHOD FOR CONNECTING A LOAD TO A HIGH DIRECT-CURRENT VOLTAGE SOURCE**
VORLADESCHALTERANORDNUNG, STROMVERSORGUNGSANORDNUNG UND VERFAHREN ZUM VERBINDEN EINER LAST MIT EINER HOCHSPANNUNGSGLEICHSTROMQUELLE
AGENCEMENT DE COMMUTATEUR DE PRÉCHARGE, AGENCEMENT D'ALIMENTATION ET PROCÉDÉ POUR CONNECTER UNE CHARGE À UNE SOURCE DE TENSION CONTINUE ÉLEVÉE

(30) Priority: 28.02.2014 DE 102014203779; 07.04.2014 DE 102014206694
(43) Date of publication of application: 04.01.2017
(73) Proprietor: TE Connectivity Germany GmbH, 64625 Bensheim (DE)
(72) Inventor: EINHORN, Jörg, 13591 Berlin (DE)
(74) Representative: Grünecker Patent- und Rechtsanwälte PartG mbB
(86) International application number: PCT/EP2015/054039
(87) International publication number: WO 2015/128423

(56) References cited:
- WO-A1-2013/128700
- JP-A- 2005 102 471
- JP-A- 2010 179 889

## Description

The invention relates to a pre-charging switch arrangement according to claim 1 for charging a capacitor of a direct-current circuit, having a pre-charging resistor, a pre-charging switch, and a direct current voltage source. The invention further relates to a power supplying arrangement according to claim 8 for an electrical load, the load being a capacitor at the input side, having a supply current circuit which connects a high-voltage source to the capacitor and having two controllable switching elements which are each arranged between the high-voltage source and the poles of the capacitor. The invention further relates to a method according to claim 10 for connecting a load to a high direct-current voltage source. Pre-charging switch arrangements for direct-current circuits are known. They are used in particular in high-voltage direct-current circuits in which a load is intended to be connected to a power source. In particular in direct-current circuits in which the load is a capacitor at the input side. A frequent application involves, for example, "Battery Disconnecting Units (BDU)" in electric or hybrid drives of vehicles. Such drives generally have high-voltage batteries which are connected to the on-board network, in particular to an inverter for providing the required alternating-current or three-phase current voltage for a drive unit. For reasons of safety, such devices have two controllable switching elements, one for each pole. These switching elements may, for example, be contactors or relays.

If, in such a direct-current circuit, the direct-current source is connected directly to the uncharged capacitor, short-circuit currents may briefly flow and may lead to damage to the components. For this purpose, the capacitor is pre-charged before it is completely connected to the direct-current voltage source. To this end, a pre-charging switch arrangement is connected parallel with one of the two controllable switching elements. In order to pre-charge the capacitor, the other controllable switching element and the pre-charging switch are then closed. The capacitor is thereby charged by means of the pre-charging resistor. If the capacitor has reached a desired charge state, the controllable switching element which is connected parallel with the pre-charging switch arrangement is also closed and the load is connected to the direct-current voltage source. The pre-charging switch can then be opened again.

In order to monitor the charge state of the capacitor, it is conventional to tap and evaluate a voltage of the capacitor across the opened controllable switching element. This voltage can provide information relating to the charge state of the capacitor. This type of voltage measurement requires complex isolation of the high-voltage lines from an electronic control system which may be present and which evaluates the voltage and produces control signals for switching the controllable switching elements. In addition, the galvanic separation between the two sides of the controllable switching elements is consequently not ensured in a reliable manner. In the known prior art, auxiliary relays are often used for galvanic separation. This solution makes a pre-charging switch arrangement complex and costly.

In order to provide a pre-charging switch arrangement, a power supplying arrangement and a method for connecting a load to a high direct-current voltage source, which can reliably detect a charge state of the capacitor, ensure a high level of reliability and additionally enable a compact structure at least of the pre-charging switch arrangement,the pre-charging resistor is at least indirectly connected to a device for detecting the voltage across the pre-charging resistor. For the power supplying arrangement, such a pre-charging switch arrangement is connected parallel with one of the two controllable switching elements. For the method mentioned in the introduction for connecting a load to a high direct-current voltage source, the load is connected to the high direct-current voltage source depending on a voltage across a pre-charging resistor which is arranged between the high direct-current voltage source and the load.

The above mentioned features afford the advantage that the voltage to be detected can be tapped at the pre-charging resistor and not at one of the controllable switching elements. At least the connections for detecting the voltage, after ending the pre-charging operation, when the pre-charging switch is open, are no longer integrated with the capacitor in the current-carrying circuit between the high-voltage source and the on-board power supply network. Since the voltage to be measured is not tapped at both sides of one of the controllable switching elements, the two sides of the controllable switching elements are each completely galvanically separated when the switching elements are opened. A use of auxiliary relays can therefore be dispensed with. Another advantage is that the same voltage can be tapped at the pre-charging resistor as at the controllable switching element which is connected in parallel. The invention therefore allows the charging of the capacitor and the detection of the voltage to determine the charge state of the capacitor to be carried out with increased reliability, whilst the requirement for complex isolation from the high-voltage circuit with respect to the electronic control system is decreased.

From JP 2005 102471 A, a pre-charging power supply switch using a diode is known.

The device for detecting the voltage across the pre-charging resistor has a comparing element for comparing the voltage tapped at the pre-charging resistor with a reference voltage from the direct-current voltage source. This voltage is referred to below as the pre-charging voltage. In this manner, it can be established in a simple manner whether the voltage at the pre-charging resistor and consequently the charge state of the capacitor corresponds to a desired value.

The direct-current voltage source for the reference voltage may be a direct-current voltage converter.

The control input of the pre-charging switch is configured for supplying a coil of the pre-charging switch, which is a relay or a contactor.

It is the object of the invention to provide a solution with a simpler construction and in which the pre-charging switch arrangement is more energy efficient.

This is achieved when the control input of the pre-charging switch is connected to the input of the direct-current voltage converter, such that the direct-current voltage converter is active precisely when the pre-charging switch is switched on.

Owing to the use of a common input for the control input of the pre-charging switch and for the direct-current voltage converter, the direct-current voltage converter is active precisely when the pre-charging switch is switched on. This makes the pre-charging switch arrangement more energy efficient. Further, such an arrangement enables the pre-charging switch arrangement to be provided with the lowest possible number of low-voltage connections.

A power supply arrangement according to the invention comprises a pre-charging switch arrangement according to the invention that is connected parallel with a controllable switching element.

In a method according to the invention, a pre-charging switch arrangement according to the invention is used.

The solution according to the invention can be further improved by means of various embodiments which are each advantageous per se and which can be freely combined with each other. These embodiments and the advantages connected therewith are discussed below.

The pre-charging switch is a contactor or a relay. These components are known and can be used with a high level of reliability for switching high voltages or currents.

In order to reduce the voltage tapped at the pre-charging resistor, the device for detecting the voltage across the pre-charging resistor may have a first voltage divider which is connected to the pre-charging resistor at the input side. The voltage divider may then provide a voltage which is proportional to the voltage across the pre-charging resistor. This may in particular be advantageous in order to protect the device for detecting from excessively high voltages. The first voltage divider may have two inputs which are connected at both ends of the pre-charging resistor.

The pre-charging switch arrangement may have precisely two high-voltage connections, the inputs of the first voltage divider, the pre-charging resistor and both connections of the pre-charging switch being arranged between the high-voltage connections on a common line section. It is thereby possible to achieve a particularly compact pre-charging switch arrangement which can additionally be integrated in an existing high direct-current circuit in a particularly simple manner.

The comparing element may in particular be a comparator. When a voltage divider is used, the output of the first voltage divider can be connected to the inverting input of the comparator. In order to prevent incorrect switching and to introduce a switching hysteresis, the comparator may be formed by a Schmitt trigger.

The direct-current voltage converter may be supplied at the input side by a low-voltage source from outside the pre-charging switch arrangement. The direct- current converter may be used in order to provide a sufficiently high direct-current voltage, with which the voltage tapped at the pre-charging resistor or provided by the first voltage divider can be compared. A supply from outside the pre-charging switch arrangement is particularly advantageous since the direct-current voltage converter can then provide a voltage which is galvanically separated from the high-voltage side. In order to define the reference voltage for the comparing element, the direct-current voltage source may be connected to the comparing element by means of a second voltage divider. When a comparator is used, the output of the second voltage divider may be connected to the non-inverting input of the comparator.

The comparing element according to the invention is connected at the output side to the input of a transmission unit. It is thereby possible to transmit a signal of the comparing element, which can be used to control a controllable switching element of the direct-current circuit.

It is particularly advantageous when the transmission unit has an output which is galvanically separated from the input thereof. The output of the transmission unit may, for example, be connected to an electronic control system. The galvanic separation enables the electronic control system to be operated separately from the high direct-current circuit. This can significantly increase the reliability, for example, of a vehicle in which such a pre-charging switch arrangement is used.

A particularly good galvanic separation can be achieved by the transmission unit being an optocoupler.

A particularly compact structure can be achieved in that a supply line of the output of the transmission unit is connected to the input of the direct-current voltage converter. If the transmission unit is, for example, an optocoupler, it is possible, for example, for the collector of the phototransistor in the optocoupler to be connected to the same positive supply line which is also connected to the direct-current voltage converter at the input side. The emitter of the phototransistor in the optocoupler can then provide the signal of the transmission unit. Such a structure enables the pre-charging switch arrangement to have a total of only three low-voltage connections, a positive connection, a negative connection and a signal line.

The pre-charging switch arrangement may have a common reference potential for a supply line of the comparing element, for the output of the direct-current voltage converter, for the input of the transmission unit, for the first and the second voltage divider, which potential is connected to a line which connects the pre-charging resistor to the pre-charging switch. Such an arrangement enables the pre-charging switch arrangement to be operated separately from the line of the high direct-current circuit, which line carries the negative high-voltage potential. Creep currents and a power consumption of the pre-charging switch arrangement can thereby be prevented when they are not used.

It is particularly advantageous for the pre-charging switch arrangement to be connected to the high direct-current circuit exclusively via two high-voltage connections. The pre-charging switch arrangement may be connected via these two connections upstream and downstream of the parallelconnected controllable switching element of the direct-current circuit. In this manner, when the pre-charging switch is open, the pre-charging switch arrangement is connected only to one pole of a high-voltage source of the direct-current circuit. When the pre-charging switch is open, the pre-charging switch arrangement is free from currents which are supplied by the high-voltage source. This enables particularly reliable construction and operation. Furthermore, when the pre-charging switch is open, no static current is taken from the battery.

At least the two voltage dividers, the pre-charging resistor, the pre-charging switch, the comparing element, the transmission unit and the direct-current voltage converter may form a component group which is arranged in a common housing. A particularly compact structure of the pre-charging switch arrangement is thereby possible. It is particularly advantageous for the housing to have precisely three low-voltage connections for operating the direct-current voltage converter and the output of the transmission unit and two high-voltage connections which are connected in parallel with a controllable switching element of the electric circuit.

The method mentioned in the introduction for connecting a load to a high direct-current voltage source can be improved in that a pre-charging switch arrangement in accordance with one of the embodiments described above is used.

In order to increase the reliability when the method is carried out, and in order to ensure the operational safety, for example, of a vehicle in which the method is used, when the desired charge state of the capacitor is reached, the pre-charging switch can be opened and the pre-charging switch arrangement can thereby be switched into a powerless state.

The invention is explained in greater detail below by way of example with reference to an embodiment and the drawings. The feature combination which is illustrated by way of example in the embodiment can, in accordance with the above explanations, be complemented by additional features in accordance with the properties of the pre-charging switch arrangement according to the invention and the power supply arrangement according to the invention as required for a specific application. It is also possible, similarly in accordance with the above explanations, for individual features to be omitted in the embodiment described when the action of this feature is not significant in a specific application.

The same reference numerals are always used in the drawings for elements which have the same function and/or the same structure.

In the drawings:
Figure 1 is a schematic circuit diagram of a pre-charging switch arrangement according to the invention in a power supply arrangement according to the invention;
Figure 2 is a schematic drawing of the structure of a device according to the invention for detecting the voltage across the resistor;
Figure 3 is a circuit diagram of an embodiment of a pre-charging switch arrangement according to the invention and a power supply arrangement according to the invention.

The devices according to the invention and the method are described below with a pre-charging switch arrangement and the second controllable switching element, for example, at the positive side of a high-current circuit. The arrangement of the devices on the negative side and the implementation of the method with the devices according to the invention at the negative side is, however, also possible. In this instance, the second controllable switching element would also be located at the negative side, whilst the first would be arranged at the positive side.

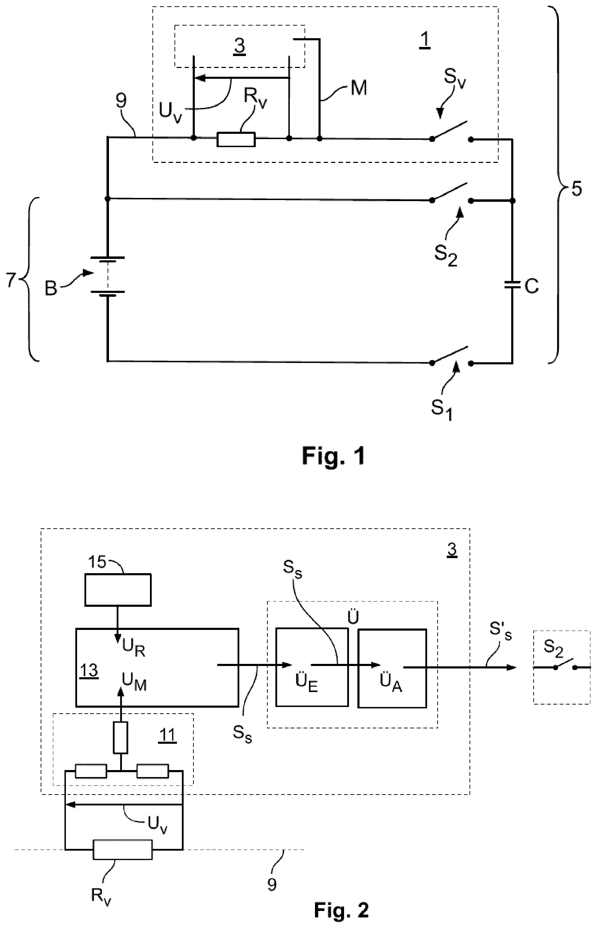

Figure 1 shows a pre-charging switch arrangement 1 according to the invention having a device 3 for detecting the voltage across the pre-charging resistor Rᵥ in a power supply arrangement 5 according to the invention. The power supply arrangement 5 has a direct-current circuit 7 which is referred to below as a power supply circuit 7. The power supply circuit 7 may connect a load, of which only the capacitor C is illustrated in Figure 1, to a high direct-current voltage source B. The high direct-current voltage source B may in particular be a high-voltage battery. The power supply circuit 7 can be switched to all poles, that is to say, controllable switching elements S₁ and S₂ are provided at both sides of the high direct-current voltage source B.

If both controllable switching elements S₁ and S₂ are closed, the capacitor C is connected to the high direct-current voltage source B. The pre-charging switch arrangement 1 is connected parallel with the controllable switching element S₂. The pre-charging switch arrangement 1 has a pre-charging resistor Rᵥ and a pre-charging switch Sᵥ. The pre-charging resistor Rᵥ and the pre-charging switch Sᵥ are arranged together in series on a line section 9.

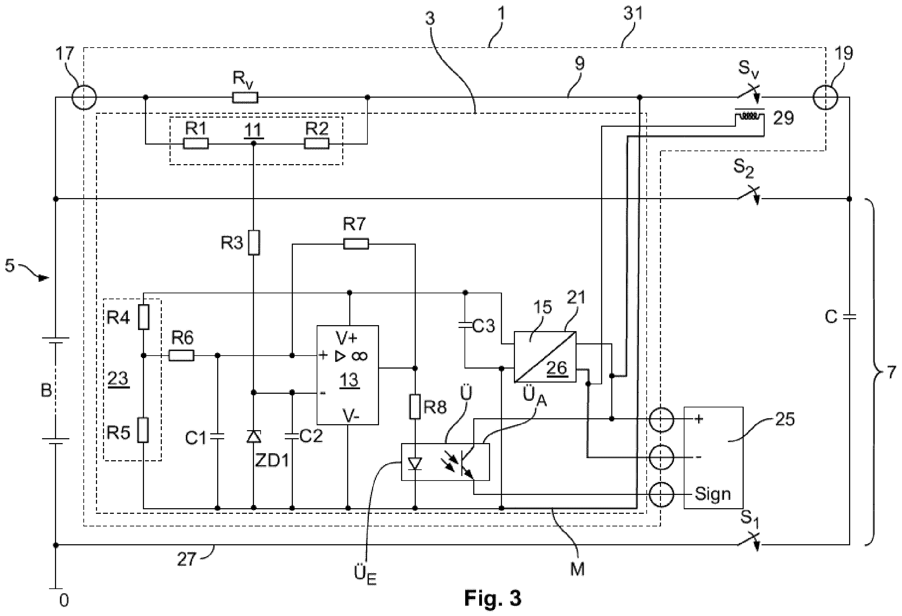

In order to detect a voltage Uᵥ across the pre-charging resistor Rᵥ, the device 3 is connected to the line section 9 upstream and downstream of the pre-charging resistor Rᵥ. The device 3 may additionally be connected to a line M as a reference potential M at an additional location of the line section 9 between the pre-charging resistor R_{V} and the pre-charging switch S_{V}. This is described with reference to Figure 3. The voltage U_{V} detected across the pre-charging resistor Rᵥ may be used to evaluate the charge state of the capacitor C.

Figure 2 is a schematic illustration of the structure of the device 3. The pre-charging voltage Uᵥ tapped at the pre-charging resistor Rᵥ is supplied to a first voltage divider 11 and from there a measurement voltage U_{M} which is converted therefrom is supplied to a comparing element 13. In the comparing element 13, the measurement voltage U_{M} is compared with a reference voltage U_{R} produced by a direct-current voltage source 15. The direct-current voltage source 15 may in particular be a direct-current voltage converter.

The comparing element 13 is connected at the output side to the input Ü_{E} of a transmission unit U. A switching signal Sₛ is directed from the comparing element 13 to the input Ü_{E} of the transmission unit U. The transmission unit U has an output Ü_{A} which is galvanically separated from the input Ü_{E}. The output Ü_{A} of the transmission unit U transmits a switching signal S'ₛ to the outer side of the device 3. The switching signal S'ₛ can be used to switch the controllable switching element S₂. The switching signal S'ₛ can be directed directly or via a suitable evaluation or electronic control system to a control input of the controllable switching element S₂. The control input may, for example, be in abutment with a coil of a switching element S₂ which is constructed as a contactor or relay.

The method according to the invention for connecting the load or the capacitor C thereof to the high direct-current voltage source B, for example, to the pre-charging switch arrangement 1 and the second controllable switching element S₂ at the positive side of the power supply circuit 7 is described below with reference to Figures 1 and 2.

At the beginning, all the switching elements S₁, S₂ and Sᵥ are open. There is no voltage at the capacitor C. In a first step, the controllable switching element S₁ is closed. The side of the capacitor C facing the switching element S₁ is then connected to a pole of the high direct-current voltage source B.

In order to pre-charge the capacitor C, the pre-charging switch S_{V} is now closed. At the same time, the device 3 can be provided with voltage. By closing the pre-charging switch S_{V}, the capacitor C is connected to the high direct-current voltage source B via the pre-charging resistor Rᵥ. Via the pre-charging resistor Rᵥ, a charge current now flows through the capacitor C, which is thereby charged. During the charging operation, the voltage U_{V} across the pre-charging resistor R_{V} is tapped from the device 3. The voltage U_{V} serves to establish the charge state of the capacitor C.

At the beginning of the charging operation, the full voltage of the high direct-current voltage source B is applied across the pre-charging resistor Rᵥ and the pre-charging voltage U_{V} and the measurement voltage U_{M} are greater than the reference voltage U_{R}. The reference voltage U_{R} is adjusted in accordance with the desired charge state of the capacitor C. The voltage U_{V} across the resistor Rᵥ decreases as the charge state of the capacitor C increases. As soon as the voltage U_{M} in the comparing element 13 is below the reference voltage U_{R}, the comparing element transmits a switching signal Sₛ to the transmission unit U.

The transmission unit U directs the switching signal Sₛ indirectly or directly to a control input of the controllable switching element S₂. The controllable switching element S₂ is thereby closed, whereby the power supply circuit 7 is closed. The load or the capacitor C thereof is then connected at all poles to the high direct-current voltage source B. If the controllable switching element S₂ is closed, the pre-charging switch S_{V} can be opened. Since the circuit is then interrupted over the line section 9, current can no longer flow through the pre-charging switch arrangement 1.

Figure 3 shows a circuit diagram of an embodiment of the pre-charging switch arrangement 1 according to the invention in a power supplying arrangement 5 according to the invention. The circuit diagram follows the structure of the arrangements and devices 1, 3 and 5 according to the invention, which structure is described with reference to Figures 1 and 2.

The pre-charging switch arrangement 1 is connected to the high-voltage potential of the power supply circuit 7 only by means of two high-voltage connections 17 and 19. As already described above, the pre-charging switch arrangement 1 is switched into a powerless state by opening the pre-charging switch Sᵥ.

The structure of the pre-charging switch arrangement 1 according to the invention is described below on the basis of the pre-charging resistor Rᵥ. Across the pre-charging resistor R_{V}, the pre-charging voltage U_{V} is tapped using the first voltage divider 11. The first voltage divider 11 is formed from the resistors R1 and R2. The pre-charging voltage U_{V} is not identical to the charge voltage at the capacitor C. However, the pre-charging voltage Uᵥ can be used to determine the charge state of the capacitor C. The first voltage divider 11 provides the measurement voltage U_{M}, which is supplied to the inverting input of the comparator 13.

The comparator 13, which acts as a comparing element 13, has supply connections V+, V-. The negative supply connection V-is in abutment with a line M of the device 3. The line M is connected to the line section 9 between the voltage divider 11 and the pre-charging switch SV. Between the inverting input of the comparator 13 and the line M, a Zener diode ZD1 and parallel therewith a capacitor C2 are connected with it limiting the voltage to a suitable level. The voltage is dependent on the comparator 13 used in a manner specific to the component. In order not to impair the function of the comparator 13, the value of the Zener voltage must be above the reference voltage at the non-inverting input. The Zener diode ZD1 serves to protect the inverting comparator input. The capacitor 2 serves to stabilise the inverting input.

An additional resistor R3 may be connected between the voltage divider 11 and the inverting input of the comparator 13.

The reference voltage U_{R} is applied at the non-inverting input of the comparator 13. The reference voltage U_{R} is provided by the direct-current voltage source 15. The direct-current voltage source 15 is the output 15 of a direct-current voltage converter 21. The negative output 15 of the direct-current voltage converter 21 is connected to the line M.

Between a positive output of the direct-current voltage converter 21 and the line M, the capacitor C3 may be connected. The capacitor C3 may serve to stabilise the output voltage of the direct-current voltage converter 21. The positive output of the direct-current voltage converter 21 is connected to the positive supply connection V+ of the comparator 13.

The reference voltage U_{R} is provided by the second voltage divider 23 which is formed by the resistors R4 and R5 and which is connected between the positive output of the direct-current voltage converter 21 and the line M. The output of the second voltage divider 23 is connected to the non-inverting input of the comparator 13 via the resistor R6. The capacitor C1 is connected between the resistor R6 and the non-inverting input of the comparator 13 and the line M and may serve to stabilise the non-inverting input of the comparator 13.

The output of the comparator may be connected to the non-inverting input via the resistor R7. A switching hysteresis can thereby be produced, whereby occurrences of incorrect switching can be prevented. The comparator 13 may constitute a Schmitt trigger together with the resistor R7 and R6.

The output of the comparator 13 may be connected via the resistor R8 to the input Ü_{E} of the transmission unit U. In the embodiment shown, the transmission unit U is an optocoupler U and the input Ü_{E} is a light diode Ü_{E}. A light signal produced by the light diode Ü_{E} can be received by the phototransistor Ü_{A} which constitutes the output Ü_{A} of the transmission unit U and be converted into an electrical signal S'ₛ. This signal S'ₛ can be used to control the controllable switching element S₂.

The phototransistor Ü_{A} can be connected to a low-voltage device 25. The low-voltage device 25 may belong to an electronic control system (not shown). The low-voltage device 25 may have a positive connection, a negative connection and a signal line. The phototransistor Ü_{A} may be connected to the positive line and to the signal line of the low-voltage device 25. At the input side, the direct-current voltage converter 21 may also be connected to the low-voltage device 25. The direct-current voltage converter 21 can be connected to the positive and the negative connection of the low-voltage device 25 and thereby obtain its operating voltage.

According to the invention, the inputs 26 of the direct-current voltage converter 21 are connected to a control input 29 of the pre-charging switch S_{V}. The same operating voltage of the low-voltage device 25 may then be used to operate both the direct-current voltage converter 21 and the control input 29, for example, a coil of the pre-charging switch Sᵥ.

A particularly compact embodiment of the pre-charging switch arrangement 1 according to the invention has only the two high-voltage connections 17, 19 and the three connections to the low-voltage device 25. The low-voltage device 25 is preferably outside the pre-charging switch arrangement 1. The pre-charging switch arrangement 1 is not connected at any location in a conductive manner to the negative branch 27 of the power supply circuit 7.

The elements of the pre-charging switch arrangement 1 preferably form a component group 31 which may be accommodated in a common housing (not shown).

### List of reference numerals

- 1: Pre-charging switch arrangement
- 3: Device
- 5: Voltage supply arrangement
- 7: Direct-current circuit
- 9: Line section
- 11: First voltage conductor
- 13: comparing element /comparator
- 15: Direct-current voltage source
- 17: High-voltage connection
- 19: High-voltage connection
- 21: Direct-current voltage converter
- 23: Second voltage divider
- 25: Low-voltage device
- 26: Input of the direct-current voltage converter
- 27: Negative branch of the power supply circuit
- 29: Control input
- 31: Component group

- B: High direct-current voltage source
- C: Capacitor
- C1: Capacitor
- C2: Capacitor
- C3: Capacitor
- M: Reference potential
- R_{V}: Pre-charging resistor
- R1: Resistor
- R2: Resistor
- R3: Resistor
- R4: Resistor
- R5: Resistor
- R6: Resistor
- R7: Resistor
- R8: Resistor
- S₁, S₂: Switching elements
- S_{S}: Switch signal
- S_{V}: Pre-charging switch
- U_{M}: Measurement voltage
- U_{R}: Reference voltage
- U_{V}: Pre-charging voltage
- U: Transmission unit/optocoupler
- Ü_{A}: Output of the transmission unit
- Ü_{E}: Input of the transmission unit/light diode
- V+, V-: Supply connections
- ZD1: Zener diode

## Claims

1. Pre-charging switch arrangement (1) for charging a capacitor (C) of a direct-current circuit (7), having a pre-charging resistor (Rv), a pre-charging switch (Sv), a direct current voltage source (15), a transmission unit (Ü) and a device (3) detecting the voltage (Uv) across the pre-charging resistor (R_{V}), wherein the pre-charging resistor (R_{V}) is at least indirectly connected to the device (3) for detecting the voltage (Uᵥ) across the pre-charging resistor (Rv), wherein the device (3) for detecting the voltage (Uᵥ) across the pre-charging resistor (Rᵥ) has a comparing element (13) for comparing the voltage (Uv) tapped at the pre-charging resistor (Rv) with a reference voltage (U_{R}) from the direct-current voltage source (15), wherein the comparing element (13) is connected at the output side to the input (ÜE) of the transmission unit (Ü), wherein the transmission unit (Ü) is configured to transmit a switching signal (S's) to the outer side of the device (3), **characterised in that** the direct-current voltage source (15) for the reference voltage (U_{R}) is a direct-current voltage converter (21), wherein the control input (29) of the pre-charging switch (Sv) is configured for supplying a coil of the pre-charging switch (Sv), which is a relay or a contactor, wherein the control input (29) of the pre-charging switch (Sv) is connected to the input (26) of the direct-current voltage converter (21), such that the direct-current voltage converter (21) is active precisely when the pre-charging switch (Sv) is switched on.

2. Pre-charging switch arrangement (1) according to claim 1, **characterised in that** the device (3) for detecting the voltage (Uᵥ) across the pre-charging resistor (Rv) has a first voltage divider (11) which is connected to the pre-charging resistor (Rᵥ) at the input side.

3. Pre-charging switch arrangement (1) according to claim 1 or 2, **characterised in that** the device (3) comprises a second voltage divider (23) and the direct-current voltage source (15) is connected to the comparing element (13) by means of the second voltage divider (23).

4. Pre-charging switch arrangement (1) according to claim 1, **characterised in that** the transmission unit (Ü) has an output (Ü_{A}) which is galvanically separated from the input (Ü_{E}) thereof.

5. Pre-charging switch arrangement (1) according to claim 4, **characterised in that** a supply line of the output (Ü_{A}) of the transmission unit (U) is connected to the input (26) of the direct-current voltage converter (21).

6. Pre-charging switch arrangement (1) according to any one of claims 1 to 5, **characterised in that** a supply line of the comparing element (13), the output (15) of the direct-current voltage converter (21), the input (Ü_{E}) of the transmission unit (Ü), the first voltage divider (11) and the second voltage divider (23), are connected to a line (9) which connects the pre-charging resistor (Rv) to the pre-charging switch (Sv).

7. Pre-charging switch arrangement (1) according to any one of claims 3 to 6, comprising a common housing and **characterised in that** at least the two voltage dividers (11, 23), the pre-charging resistor (Rv), the pre-charging switch (Sv), the comparing element (13), the transmission unit (U) and the direct-current voltage converter (21) form a component group (31) which is arranged in the common housing.

8. Power supplying arrangement (5) for an electrical load, the load having a capacitor (C) at its input side, having a direct-current circuit (7) which is configured to connect a high direct-current voltage source (B) to the capacitor (C) and having two controllable switching elements (S₁, S₂) which are each configured to be arranged between the high direct-current voltage source (B) and the poles of the capacitor (C), **characterised in that** the power supply arrangement (5) comprises a pre-charging switch arrangement (1) according to any one of claims 1 to 7, which is connected in parallel with one of said controllable switching elements (S₂).

9. Power supplying arrangement (5) for an electrical load according to claim 8, **characterised in that** the pre-charging switch arrangement (1) is connected to the direct-current circuit (7) only by means of two high-voltage connections (17, 19) upstream and downstream of the one of said controllable switching elements (S₂).

10. Method for connecting a load to a high direct-current voltage source (B), wherein the load is connected to the high direct-current voltage source (B) depending on a voltage (Uᵥ) across a pre-charging resistor (Rᵥ) which is arranged between the high direct-current voltage source (B) and the load **characterised in that** a power supplying arrangement (5) according to any one of claims 8 and 9 is used.

11. Method according to claim 10, **characterised in that**, when the desired charge state is reached, the pre-charging switch (Sv) is opened and the pre-charging switch arrangement (1) is thereby switched into a powerless state.

## Patentansprüche

1. Vorlade-Schalteranordnung (1) zum Laden eines Kondensators (C) einer Gleichstromschaltung (7), die einen Vorlade-Widerstand (Rv), einen Vorlade-Schalter (Sv), eine Gleichstrom-Spannungsquelle (15), eine Übertragungs-Einheit (Ü) sowie eine Einrichtung (3) zum Erfassen der Spannung (Uv) über den Vorlade-Widerstand (Rv) aufweist, wobei der Vorlade-Widerstand (Rv) wenigstens indirekt mit der Einrichtung (3) zum Erfassen der Spannung (Uv) über den Vorlade-Widerstand (Rv) verbunden ist, die Einrichtung (3) zum Erfassen der Spannung (Uv) über den Vorlade-Widerstand (Rv) ein Vergleichselement (13) zum Vergleichen der an dem Vorlade-Widerstand (Rv) abgegriffenen Spannung (Uv) mit einer Bezugsspannung (U_{R}) von der Gleichstrom-Spannungsquelle (15) aufweist, das Vergleichselement (13) an der Ausgangsseite mit dem Eingang (ÜE) der Übertragungs-Einheit (Ü) verbunden ist, die Übertragungs-Einheit (Ü) zum Übertragen eines Schaltsignals (S's) zu der Außenseite der Einrichtung (3) ausgeführt ist, **dadurch gekennzeichnet, dass** die Gleichstrom-Spannungsquelle (15) für die Bezugsspannung (U_{R}) ein Gleichstrom-Spannungswandler (21) ist, wobei der Steuereingang (29) des Vorlade-Schalters (Sv) zum Speisen einer Spule des Vorlade-Schalters (Sv) ausgeführt ist, der ein Relais oder ein Schütz ist, der Steuereingang (29) des Vorlade-Schalters (Sv) mit dem Eingang (26) des Gleichstrom-Spannungswandlers (21) so verbunden ist, dass der Gleichstrom-Spannungswandler (21) genau dann aktiv ist, wenn der Vorlade-Schalter (Sv) geschlossen ist.

2. Vorlade-Schalteranordnung (1) nach Anspruch 1, **dadurch gekennzeichnet, geweihte** die Einrichtung (3) zum Erfassen der Spannung (Uv) über den Vorlade-Widerstand (Rv) einen ersten Spannungsteiler (11) aufweist, der an der Eingangsseite mit dem Vorlade-Widerstand (R_{V}) verbunden ist.

3. Vorlade-Schalteranordnung (1) nach Anspruch 1 oder 2, **dadurch gekennzeichnet, dass** die Einrichtung (3) einen zweiten Spannungsteiler (23) umfasst und die Gleichstrom-Spannungsquelle (15) über den zweiten Spannungsteiler (23) mit dem Vergleichselement (13) verbunden ist.

4. Vorlade-Schalteranordnung (1) nach Anspruch 1, **dadurch gekennzeichnet, dass** die Übertragungs-Einheit (Ü) einen Ausgang (Ü_{A}) aufweist, der von ihrem Eingang (Ü_{E}) galvanisch getrennt ist.

5. Vorlade-Schalteranordnung (1) nach Anspruch 4, **dadurch gekennzeichnet, dass** eine Speiseleitung des Ausgangs (Ü_{A}) der Übertragungs-Einheit (Ü) mit dem Eingang (26) des Gleichstrom-Spannungswandlers (21) verbunden ist.

6. Vorlade-Schalteranordnung (1) nach einem der Ansprüche 1 bis 5, **dadurch gekennzeichnet, dass** eine Speiseleitung des Vergleichselementes (13), der Ausgang (15) des Gleichstrom-Spannungswandlers (21), der Eingang (Ü_{E}) der Übertragungs-Einheit (Ü), der erste Spannungsteiler (11) und der zweite Spannungsteiler (23) mit einer Leitung (9) verbunden sind, die den Vorlade-Widerstand (Rv) mit dem Vorlade-Schalter (Sv) verbindet.

7. Vorlade-Schalteranordnung (1) nach einem der Ansprüche 3 bis 6, die ein gemeinsames Gehäuse umfasst und **dadurch gekennzeichnet ist, dass** wenigstens die zwei Spannungsteiler (11, 23), der Vorlade-Widerstand (Rv), der Vorlade-Schalter (Sv), das Vergleichselement (13), die Übertragungs-Einheit (Ü) und der Gleichstrom-Spannungswandler (21) eine Komponentengruppe (31) bilden, die in dem gemeinsamen Gehäuse angeordnet ist.

8. Stromversorgungsanordnung (5) für eine elektrische Last, wobei die Last an ihre Eingangsseite einen Kondensator (C) aufweist, eine Gleichstromschaltung (7) aufweist, die zum Verbinden einer Quelle (B) hoher Gleichspannung mit dem Kondensator (C) ausgeführt ist und zwei steuerbare Schaltelemente (S₁, S₂) aufweist, die jeweils so ausgeführt sind, dass sie zwischen der Quelle (B) hoher Gleichspannung und den Polen des Kondensators (C) angeordnet sind, **dadurch gekennzeichnet, dass** die Stromversorgungsanordnung (5) eine Vorlade-Schalteranordnung (1) nach einem der Ansprüche 1 bis 7 umfasst, die parallel mit einem der steuerbaren Schaltelemente (S₂) verbunden ist.

9. Stromversorgungsanordnung (5) für eine elektrische Last nach Anspruch 8, **dadurch gekennzeichnet, dass** die Vorlade-Schalteranordnung (1) nur über zwei Hochspannungs-Verbindungen (17, 19) vor und hinter dem einen der steuerbaren Schaltelemente (S₂) mit der Gleichstromschaltung (7) verbunden ist.

10. Verfahren zum Verbinden einer Last mit einer Quelle (B) hoher Gleichspannung, wobei die Last in Abhängigkeit von einer Spannung (Uv) über einen Vorlade-Widerstand (Rv), der zwischen der Quelle (B) hoher Gleichspannung und der Last angeordnet ist, mit der Quelle (B) hoher Gleichspannung verbunden wird, **dadurch gekennzeichnet, dass** eine Stromversorgungsanordnung (5) nach einem der Ansprüche 8 und 9 eingesetzt wird.

11. Verfahren nach Anspruch 10, **dadurch gekennzeichnet, dass,** wenn der gewünschte Ladezustand erreicht wird, der Vorlade-Schalter (Sv) geöffnet wird und damit die Vorladeschalteranordnung (1) in einen stromlosen Zustand geschaltet wird.

## Revendications

1. Agencement d'interrupteurs de charge préliminaire (1) permettant de charger un condensateur (C) d'un circuit en courant continu (7) comportant une résistance de charge préliminaire (R_{V}), un interrupteur de charge préliminaire (S_{V}), une source de tension en courant continu (15), une unité de transmission (Ü) et un dispositif (3) détectant la tension (U_{V}) aux bornes de la résistance de charge préliminaire (R_{V}), la résistance de charge préliminaire (R_{V}) étant au moins indirectement reliée au dispositif (3) afin de détecter la tension (Uᵥ) aux bornes de la résistance de charge préliminaire (R_{V}), le dispositif (3) permettant de détecter la tension (U_{V}) aux bornes de la résistance de charge préliminaire (R_{V}) comportant un élément de comparaison (13) destiné à comparer la tension (U_{V}) prise au niveau de la résistance de charge préliminaire (R_{V}) à une tension de référence (U_{R}) issue de la source de tension en courant continu (15), l'élément de comparaison (13) étant relié depuis le côté sortie à l'entrée (Ü_{E}) de l'unité de transmission (Ü), l'unité de transmission (Ü) étant configurée pour transmettre un signal de commutation (S's) à la sortie du dispositif (3),
**caractérisé en ce que** la source de tension en courant constant (15) pour la tension de référence (U_{R}) est un convertisseur de tension en courant constant (21), l'entrée de commande (29) de l'interrupteur de charge préliminaire (S_{V}) étant configurée pour alimenter une bobine de l'interrupteur de charge préliminaire (S_{V}) qui est un relais ou un contacteur, l'entrée de commande (29) de l'interrupteur de charge préliminaire (S_{V}) étant reliée à l'entrée (26) du convertisseur de tension en courant continu (21) de sorte à ce que le convertisseur de tension en courant continu (21) soit précisément actif lorsque l'interrupteur de charge préliminaire (S_{V}) est rendu passant.

2. Agencement d'interrupteurs de charge préliminaire (1) selon la revendication 1, **caractérisé en ce que** le dispositif (3) permettant de détecter la tension (U_{V}) aux bornes de la résistance de charge préliminaire (R_{V}) comporte un premier diviseur de tension (11) qui est relié à la résistance de charge préliminaire (R_{V}) du côté de l'entrée.

3. Agencement d'interrupteurs de charge préliminaire (1) selon la revendication 1 ou la revendication 2, **caractérisé en ce que** le dispositif (3) comprend un second diviseur de tension (23), et la source de tension en courant continu (15) est reliée à l'élément de comparaison (13) au moyen du second diviseur de tension (23).

4. Agencement d'interrupteurs de charge préliminaire (1) selon la revendication 1, **caractérisé en ce que** l'unité de transmission (Ü) possède une sortie (Ü_{A}) qui est séparée galvaniquement de son entrée (Ü_{E}).

5. Agencement d'interrupteurs de charge préliminaire (1) selon la revendication 4, **caractérisé en ce qu'**une ligne d'alimentation de la sortie (Ü_{A}) de l'unité de transmission (Ü) est reliée à l'entrée (26) du convertisseur de tension en courant continu (21).

6. Agencement d'interrupteurs de charge préliminaire (1) selon l'une quelconque des revendications 1 à 5, **caractérisé en ce qu'**une ligne d'alimentation de l'élément de comparaison (13), la sortie (15) du convertisseur de tension en courant continu (21), l'entrée (Ü_{E}) de l'unité de transmission (Ü), le premier diviseur de tension (11) et le second diviseur de tension (23) sont reliés à une ligne (9) qui relie la résistance de charge préliminaire (R_{V}) à l'interrupteur de charge préliminaire (Sᵥ).

7. Agencement d'interrupteurs de charge préliminaire (1) selon l'une quelconque des revendications 3 à 6, comprenant une enveloppe commune et **caractérisé en ce que** : au moins les deux diviseurs de tension (11, 23), la résistance de charge préliminaire (R_{V}), l'interrupteur de charge préliminaire (S_{V}), l'élément de comparaison (13), l'unité de transmission (Ü) et le convertisseur de tension courant continu (21) forment un groupe de composants (31) qui est agencé dans l'enveloppe commune.

8. Agencement d'alimentation (5) pour une charge électrique, la charge comportant un condensateur (C) sur son entrée, comportant un circuit en courant continu (7) qui est configuré pour relier une source de tension en courant continu (B) au condensateur (C) et comportant deux éléments contrôlables de commutation (S₁, S₂) qui sont configurés chacun pour être agencés entre la source de tension en courant continu (B) et les pôles du condensateur (C), **caractérisé en ce que** l'agencement d'alimentation (5) comprend un agencement d'interrupteurs de charge préliminaire (1) conforme à l'une quelconque des revendications 1 à 7, qui est relié en parallèle avec l'un desdits éléments contrôlables de commutation (S₂).

9. Agencement d'alimentation (5) pour une charge électrique selon la revendication 8, **caractérisé en ce que** l'agencement d'interrupteurs de charge préliminaire (1) n'est relié au circuit en courant continu (7) qu'au moyen de de connexion haute tension (17, 19) en amont et en aval desdits éléments parmi lesdits éléments contrôlables de commutation (S₂) .

10. Procédé de connexion d'une charge à une source de tension en courant constant (B), la charge étant reliée à la source de tension en courant continu (B) en fonction d'une tension (U_{V}) aux bornes d'une résistance de charge préliminaire (R_{V}) qui est agencée entre la source de haute tension en courant continu (B) et la charge, **caractérisé en ce qu'**il est utilisé un agencement d'alimentation (5) conforme à l'une quelconque des revendications 8 et 9.

11. Procédé selon la revendication 10, **caractérisé en ce que**, lorsque l'état de charge souhaité est atteint, l'interrupteur de charge préliminaire (S_{V)} est ouvert et l'agencement d'interrupteurs de charge préliminaire (1) est ainsi basculé dans un état hors alimentation.
